# EUROPEAN PATENT APPLICATION

(11) **EP 2 275 202 A1**
(43) Date of publication of application: **19.01.2011**
(21) Application number: 09719157.1
(22) Date of filing: 11.03.2009
(51) Int. Cl.: B01J 20/26, A61K 9/08, A61K 47/34, C08G 65/333

(54) **CARBONYL COMPOUND REMOVER**

(30) Priority: 13.03.2008 JP 2008063814
(71) Applicant: Ajinomoto Co., Inc., Tokyo 104-8315 (JP)
(72) Inventor: YAMAMOTO, Takashi, Kawasaki-shi Kanagawa 210-8681 (JP); HIRAMA, Ryusuke, Kawasaki-shi Kanagawa 210-8681 (JP); HATANAKA, Toshihiro, Kawasaki-shi Kanagawa 210-8681 (JP)
(74) Representative: Nicholls, Kathryn Margaret
(86) International application number: PCT/JP2009/054672
(87) International publication number: WO 2009/113578

(57) **Abstract**

A carbonyl compound remover comprising at least one polyether resin that includes a unit shown by any of the formulas (I) to (IV) as an active ingredient, a method of preventing coloration of an infusion comprising causing the carbonyl compound remover to come in contact with an infusion that may produce and accumulate a carbonyl compound during heat sterilization or storage, or an infusion that contains a carbonyl compound, and a novel crosslinked polyether resin are disclosed. The carbonyl compound remover that may suppress a Maillard reaction in a mixture of an amino acid infusion and a sugar infusion or the like to effectively prevent coloration due to a Maillard reaction, the method of preventing coloration of an infusion by using the remover, and the novel crosslinked polyether resin are offered in the present invention.

In the formulas, n1 and n2 represent integers from 1 to 100, A represents a unit (A1) or (A2), or a combination of the (A1) and (A2), R represents a hydrogen atom or an alkyl group having 1 to 6 carbon atoms, and Q represents a group shown by CH₂ONH₂.

## Description

### TECHNICAL FIELD

The present invention relates to a carbonyl compound remover that includes a polyether resin that includes aminooxy group(s) at its molecular end(s) as an active ingredient, a method of preventing coloration of an infusion using the carbonyl compound remover, and a crosslinked polyether resin that includes aminooxy group(s) at its molecular end(s).

### BACKGROUND ART

When oral nutrition or tube feeding is impossible or insufficient, or the digestive function of a patient has significantly deteriorated, or passage of diet through the digestive tract causes progression of a disease, an infusion is transvenously administered in order to save the life of a patient.

For example, a sugar infusion that contains a reducing sugar and the like, an amino acid infusion that contains an essential amino acid and the like, an electrolyte infusion that contains minerals, a fat emulsion that contains a vegetable oil emulsion and the like, a vitamin mixture, and the like are commercially available. These infusions are appropriately mixed and used depending on the symptom of a patient and the like.

However, since the sugar infusion, the amino acid infusion, the electrolyte infusion, and the fat emulsion are stable under different conditions, various problems may occur when mixing these infusions. For example, when mixing the amino acid infusion with the sugar infusion, and heat-sterilizing the mixture, coloration occurs to a large extent due to a Maillard reaction.

In order to solve these problems, Patent Documents 1 and 2 disclose a method that utilizes a container in which two chambers are formed by an isolation means, wherein a first chamber contains a sugar infusion, and a second chamber contains an amino acid infusion. The container is sterilized and stored in this state. The isolation means is removed before use so that the sugar infusion and the amino acid infusion are mixed to obtain a high-calorie nutrient infusion that contains sugar, amino acids, and the like.
However, it is troublesome to perform the above mixing operation before use, and the infusion may be infected with bacteria during the mixing operation.

On the other hand, technology exists that prevents a deterioration in sugar membrane function by adding a carbonyl compound remover to a sugar infusion to remove decomposed products of glucose contained in the sugar infusion (Patent Document 3).

Patent Document 1: JP-A-5-31151
Patent Document 2: JP-A-5-32540
Patent Document 3: WO00/10606

### DISCLOSURE OF THE INVENTION

### PROBLEMS TO BE SOLVED BY THE INVENTION

The present invention was conceived in view of the above problems. An object of the present invention is to provide a carbonyl compound remover that suppresses a Maillard reaction in a mixture of an amino acid infusion and a sugar infusion to effectively prevent coloration due to a Maillard reaction, a method of preventing coloration of an infusion using the remover, and a crosslinked polyether resin that includes aminooxy group(s) at its molecular end(s).

### MEANS FOR SOLVING THE PROBLEMS

The inventors of the present invention reacted a crosslinked polyether resin shown by the following formula (a) that includes an aminomethyl group at its molecular end with aminooxyacetic acid in which the amino group is protected by a t-butoxycarbonyl group ("Boc") (Boc-NHOCH₂COOH), and deprotected the resulting product to synthesize a crosslinked polyether resin that includes aminooxy group(s) at its molecular end(s) (refer to (A)).

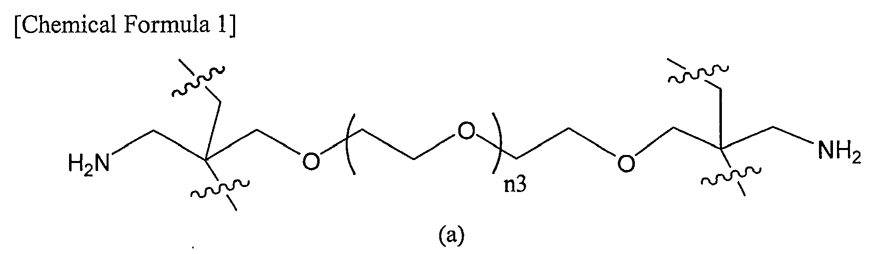

In the above formula, n3 is the same as defined below. The inventors found that coloration of a mixture of an amino acid infusion and a sugar infusion can be reliably prevented (i.e., coloring reactions in an aqueous solution can be efficiently suppressed) by causing the resulting hydrophilic crosslinked polyether resin to come in contact with the mixture. The inventors generalized this finding to complete the present invention.

According to a first aspect of the present invention, there is provided a carbonyl compound remover comprising at least one polyether resin that includes a unit shown by any of the following formulas (I) to (IV) as an active ingredient.

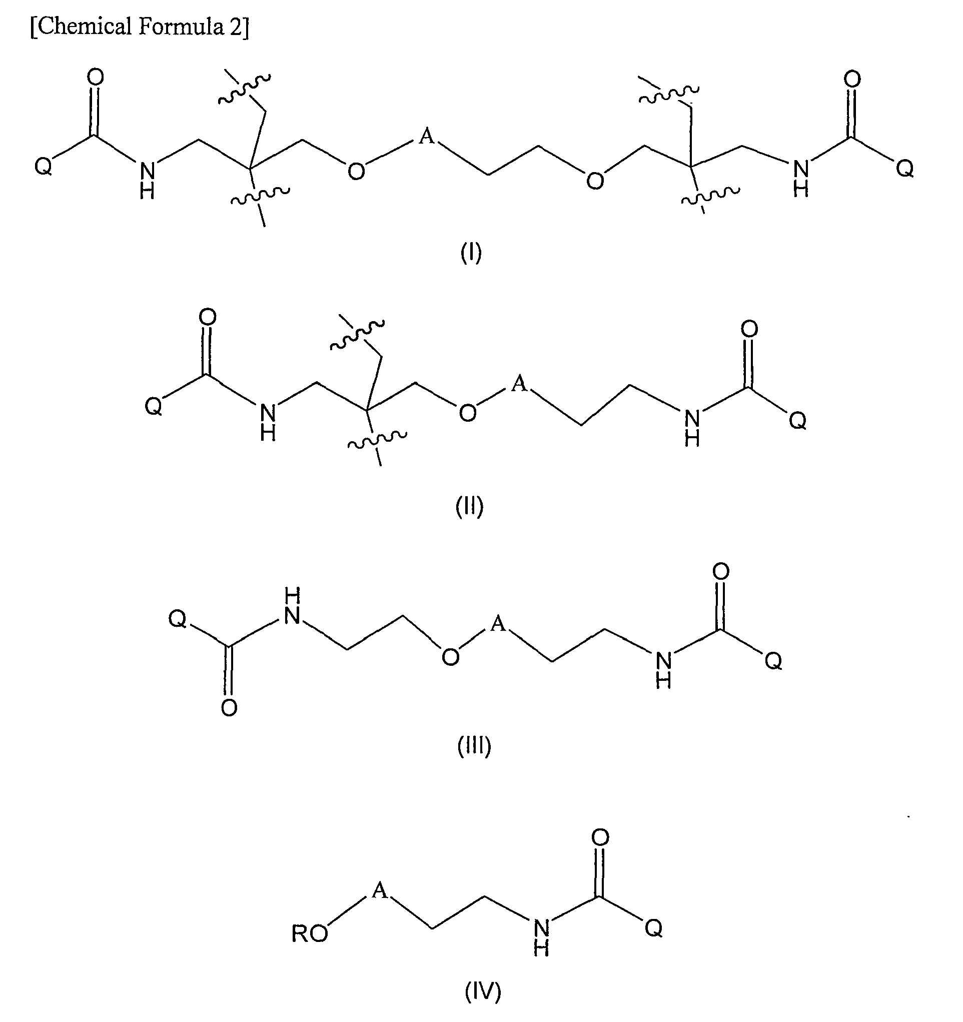

In the above formulas, A represents a unit shown by the following formula (A1) or (A2), or a combination of the units shown by the formulas (A1) and (A2),

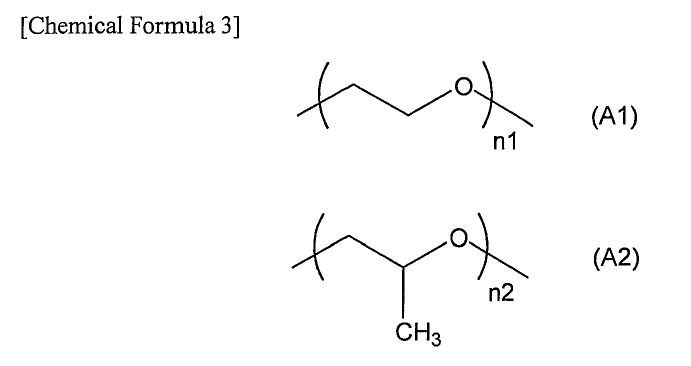

wherein n1 and n2 are individually integers from 1 to 100, R represents a hydrogen atom or an alkyl group having 1 to 6 carbon atoms, and Q represents a group shown by CH₂ONH₂.
According to a second aspect of the present invention, there is provided a method of preventing coloration of an infusion comprising causing the carbonyl compound remover according to the present invention to come in contact with an infusion that may produce and accumulate a carbonyl compound during heat sterilization or storage, or an infusion that contains a carbonyl compound.
According to a third aspect of the present invention, there is provided a crosslinked polyether resin comprising a unit shown by the following formula (I-1) or (II-1),

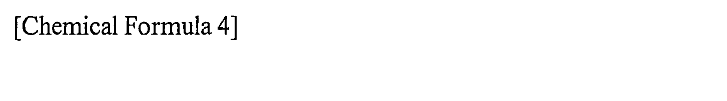

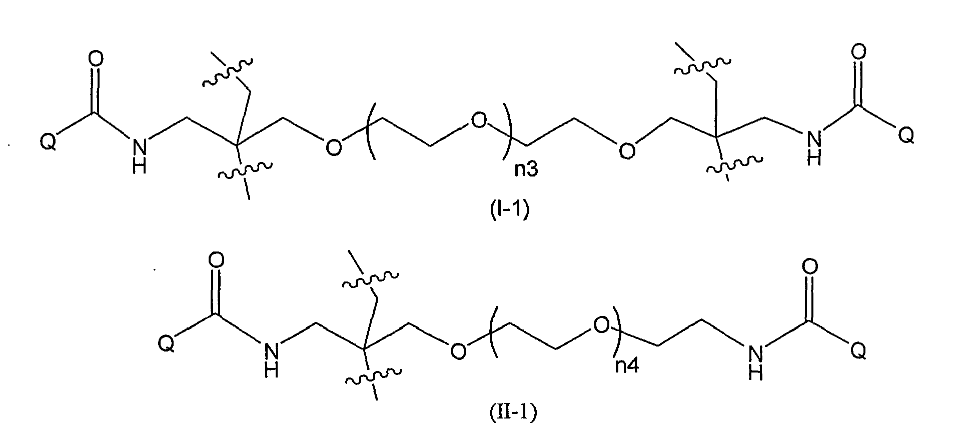

wherein n3 and n4 are individually integers from 1 to 100, and Q represents a group shown by CH₂ONH₂.
The crosslinked polyether resin that includes a unit shown by the formula (I-1) or (II-1) is a novel substance.

### EFFECTS OF THE INVENTION

The carbonyl compound remover according to the present invention can suppress a Maillard reaction in a mixture of an amino acid infusion and a sugar infusion to effectively prevent coloration due to a Maillard reaction.
The method of preventing coloration of an infusion according to the present invention can simply and reliably suppress a Maillard reaction in a mixture of an amino acid infusion and a sugar infusion.
Since the novel crosslinked polyether resin according to the present invention has a crosslinked structure and includes an aminooxy group bonded to the polymer main chain via an amide bond at its molecular end, the crosslinked polyether resin according to the present invention is chemically stable, and can advantageously suppress a Maillard reaction.

### BRIEF DESCRIPTION OF THE DRAWINGS

FIG. 1 shows an IR spectrum of a resin having a structure shown by the formula (i-1) and including an aminomethyl group at its molecular end.
FIG. 2 shows an IR spectrum of a crosslinked polyether resin having a structure shown by the formula (I-1).

### BEST MODE FOR CARRYING OUT THE INVENTION

### 1) Carbonyl compound remover

The carbonyl compound remover according to the first aspect of the present invention includes at least one polyether resin that includes a unit shown by any of the formulas (I) to (IV) as an active ingredient.

In the formulas (I) to (IV), A represents a unit shown by the formula (A1) or (A2), or a combination of the units shown by the formulas (A1) and (A2).
Examples of a combination of the units shown by the formulas (A1) and (A2) include, but are not limited to, units shown by the following formulas (A3) to (A6),

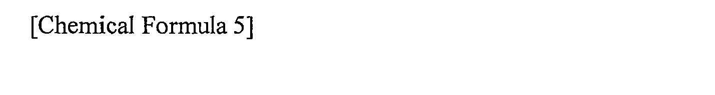

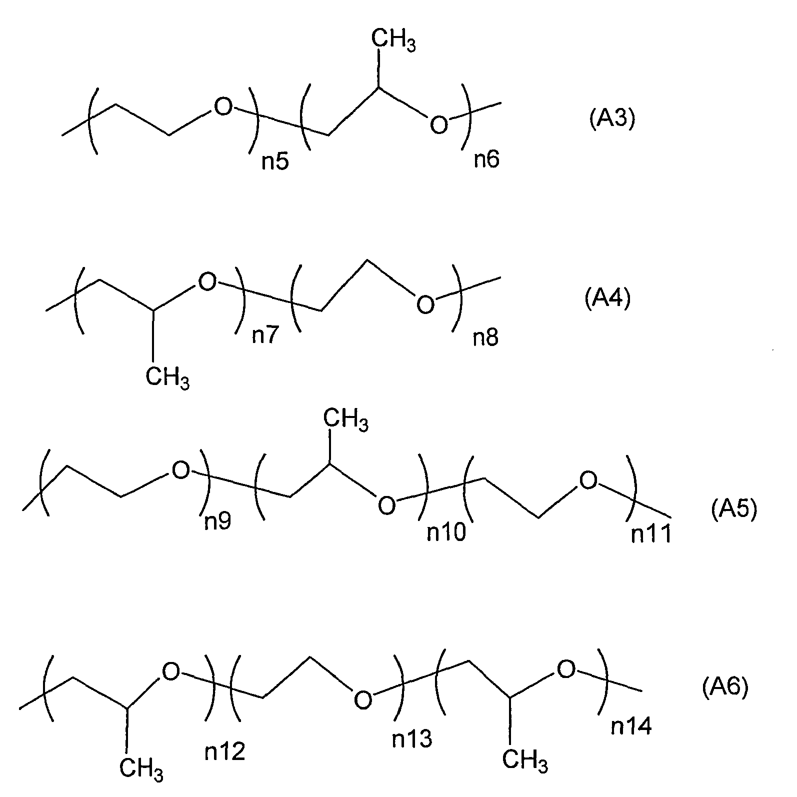

wherein n1 to n14 are individually integers from 1 to 100.
Among these, the unit shown by the formula (A1) is particularly preferable.
Q represents a group shown by CH₂ONH₂.

R in the formula (IV) represents a hydrogen atom or an alkyl group having 1 to 6 carbon atoms (e.g., methyl group, ethyl group, n-propyl group, isopropyl group, or n-butyl group).

It is common at the point which the polyether resin including a unit shown by any of the formulas (I) to (IV) has a hydrophilic polyether skeleton (e.g., the units shown by the formulas (A1) to (A6)) as a main chain, and has a group (Q) shown by CH₂ONH₂ at its molecular end.

Among the polyether resins shown by the formulas (I) to (IV), the polyether resins shown by the formulas (I) and (II) that have a crosslinked structure are preferable due to an excellent carbonyl compound removing capability and chemical stability, with the crosslinked polyether resin shown by the formula (I) being particularly preferable. Note that the polyether resins shown by the formulas (I) and (II) are novel substances.

The polyether resin that includes a unit shown by any of the formulas (I) to (IV) may be produced as follows.

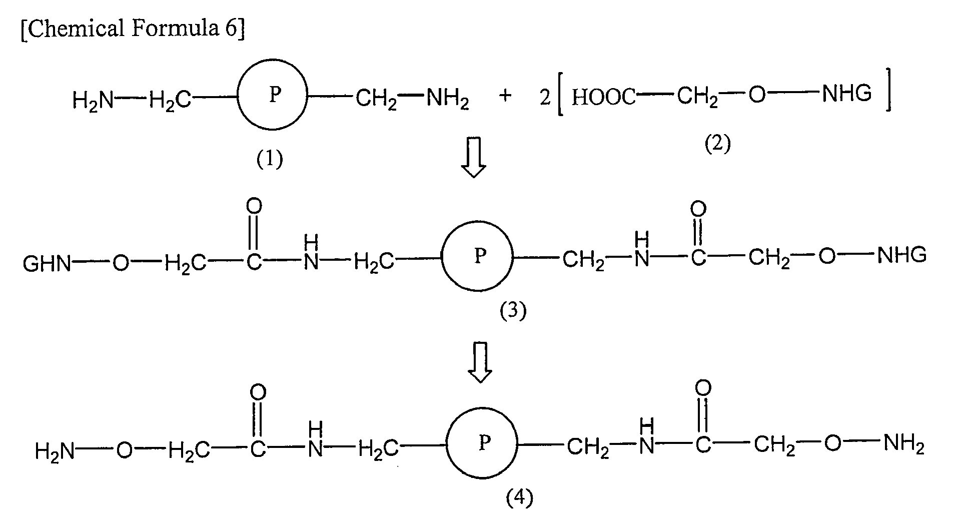

The polymer shown by the formula (1) is shown by any of the following formulas (i) to (iii),

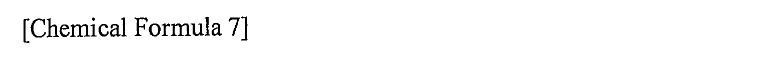

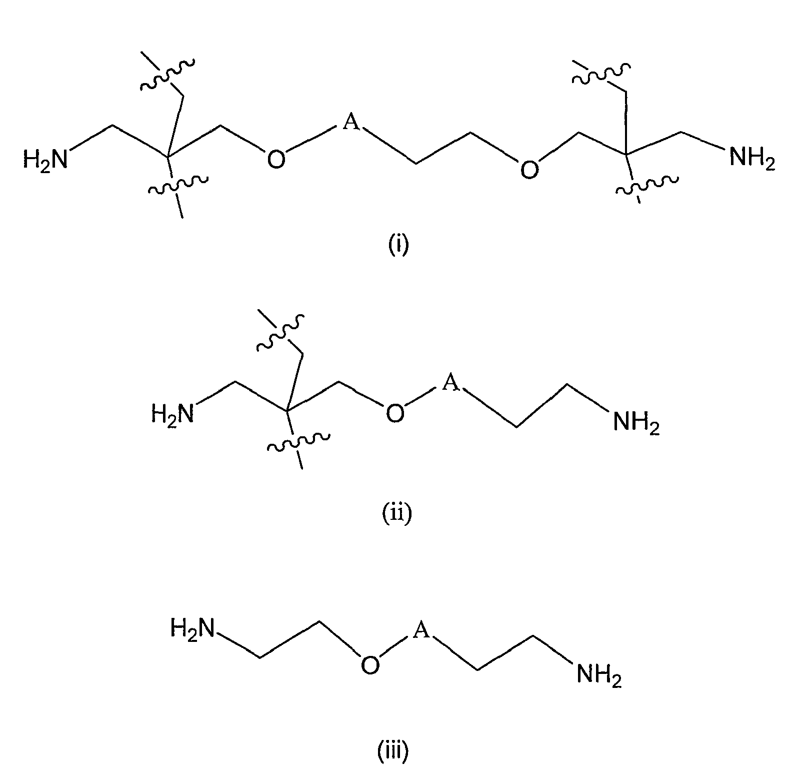

wherein A is the same as defined above.

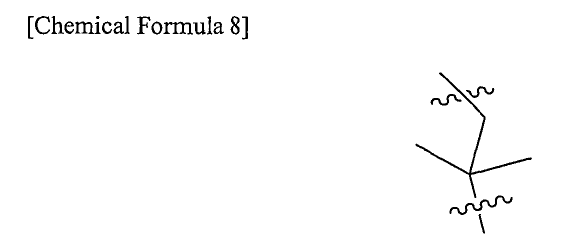

The partial structure shown by the above formula is a site in which units shown by the following formula (i-a) or units shown by the following formula (ii-a) are crosslinked.

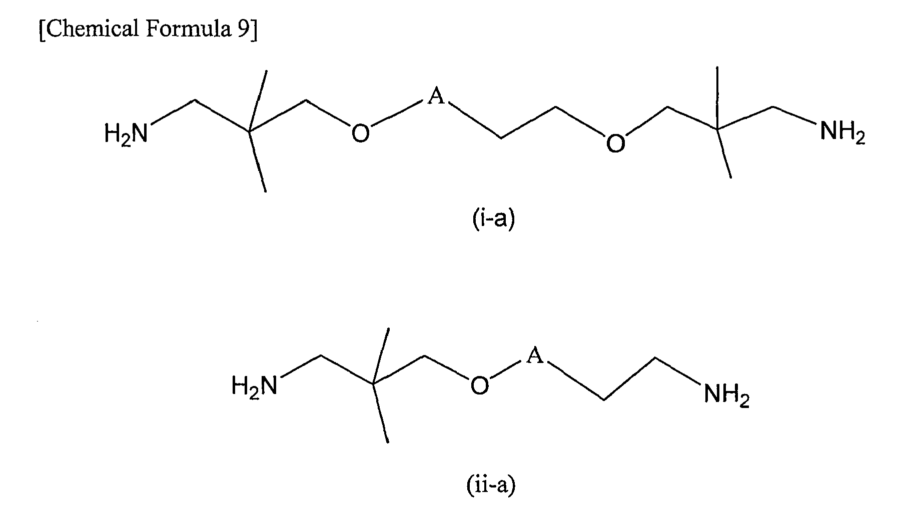

Specifically, a polyether resin shown by the formula (1) that includes an aminomethyl group (-CH₂NH₂) at its molecular end is reacted with an N-substituted aminooxyacetic acid shown by the formula (2): GNHOCH₂COOH (wherein G represents a protecting group for the amino group) in the presence of a dehydration-condensation agent to obtain a polyether resin shown by the formula (3) (hereinafter may be referred to as "polyether resin (3)"). The protecting group G for the amino group is then eliminated (i.e., the amino group is deprotected) to obtain the target polyether resin shown by the formula (4) (hereinafter may be referred to as "polyether resin (4)").

Examples of the dehydration-condensation agent include, but are not limited to, a dehydration-condensation agent that may be used when synthesizing a compound that includes an amide bond (CONH) by condensing an amino group of an amino group-containing compound and a carboxyl group of a carboxyl group-containing compound.

Specific examples of the dehydration-condensation agent include a carbodiimide condensation agent, a uronium condensation agent, a phosphonium condensation agent, diphenylphosphoryl azide, a combination of such a condensation agent and a condensation aid (dehydration aid), and the like.
Examples of the condensation aid (dehydration aid) include N-hydroxypolycarboxylic imides, N-hydroxytriazoles, triazines, ethyl 2-hydroxyimino-2-cyanoacetate, and the like.

The reaction may be carried out in an appropriate solvent. The solvent is not particularly limited insofar as the solvent is inert to the reaction. Examples of the solvent include amide solvents such as N,N-dimethylformamide, N,N-dimethylacetamide, N-methylpyrrolidone, and hexamethylphosphoric triamide; ether solvents such as diethyl ether, diisopropyl ether, tetrahydrofuran, and 1,2-dimethoxyethane; ketone solvents such as acetone, methyl isobutyl ketone, and cyclohexanone; halogenated hydrocarbon solvents such as dichloromethane, chloroform, carbon tetrachloride, and 1,2-dichloroethane; aromatic hydrocarbon solvents such as benzene, toluene, and xylene; aliphatic hydrocarbon solvents such as n-pentane, n-hexane, and n-heptane; and a mixed solvent consisting of two or more of these solvents.

The reaction temperature is normally -10 to +100°C, and preferably 0 to 50°C. The reaction time is normally several tens of minutes to several tens of hours. The reaction time varies depending on the reaction scale.

In the N-substituted aminooxyacetic acid shown by the formula (2): GNHOCH₂COOH, G represents a protecting group for the amino group, such as a t-butoxycarbonyl (Boc) group.

After completion of the reaction, the product is subjected to a post-treatment normally used in organic chemistry, and is optionally isolated by purification to obtain the polyether resin (3).
Note that an acid described later may be added to the reaction solution of the polyether resin shown by the formula (1) and the N-substituted aminooxyacetic acid shown by the formula (2), and the amino group may be deprotected to obtain the target polyether resin (4) without isolating the polyether resin (3).

If unreacted amino groups remain after the above reaction, a carbonyl compound may not be advantageously removed. Therefore, it is preferable to completely acylate remaining amino groups after completion of the reaction between the polyether resin shown by the formula (1) and the N-substituted aminooxyacetic acid shown by the formula (2) by adding an acylating agent (e.g., acetic anhydride-pyridine) to the reaction solution before deprotecting the amino group.

The protecting group G for the amino group of the resulting polyether resin (3) is then eliminated (i.e., the amino group is deprotected).
The protecting group G may be eliminated by a conventionally known method depending on the type of the protecting group G. For example, when the protecting group G is Boc, the protecting group G may be eliminated using an acid such as hydrochloric acid, sulfuric acid, or fluoroacetic acid; a combination of a strong acid (e.g., trifluoroacetic acid) and a silane compound (e.g., diisopropylsilane or triisopropylsilane); or the like. The acid is normally used in an amount of 2 to 20 mol based on 1 mol of the polyether resin (3).

The protecting group G may be eliminated in an appropriate solvent. The solvent is not particularly limited insofar as the solvent is inert to the reaction. Examples of the solvent include amide solvents such as N,N-dimethylformamide, N,N-dimethylacetamide, N-methylpyrrolidone, and hexamethylphosphoric triamide; ether solvents such as diethyl ether, diisopropyl ether, tetrahydrofuran, and 1,2-dimethoxyethane; ketone solvents such as methyl isobutyl ketone and cyclohexanone; halogenated hydrocarbon solvents such as dichloromethane, chloroform, carbon tetrachloride, and 1,2-dichloroethane; aromatic hydrocarbon solvents such as benzene, toluene, and xylene; aliphatic hydrocarbon solvents such as n-pentane, n-hexane, and n-heptane; and a mixed solvent consisting of two or more of these solvents.

The reaction temperature employed when eliminating the protecting group G is normally -10 to +100°C, and preferably 0 to 50°C. The reaction time is normally several tens of minutes to several tens of hours. The reaction time varies depending on the reaction scale.

After completion of the reaction, the product is subjected to a post-treatment normally used in organic chemistry, and is optionally isolated by purification to obtain the polyether resin (4).

The polyether resin that includes the unit shown by the formula (IV) may be produced as follows.

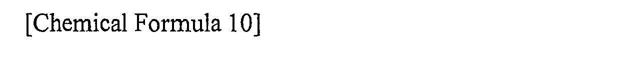

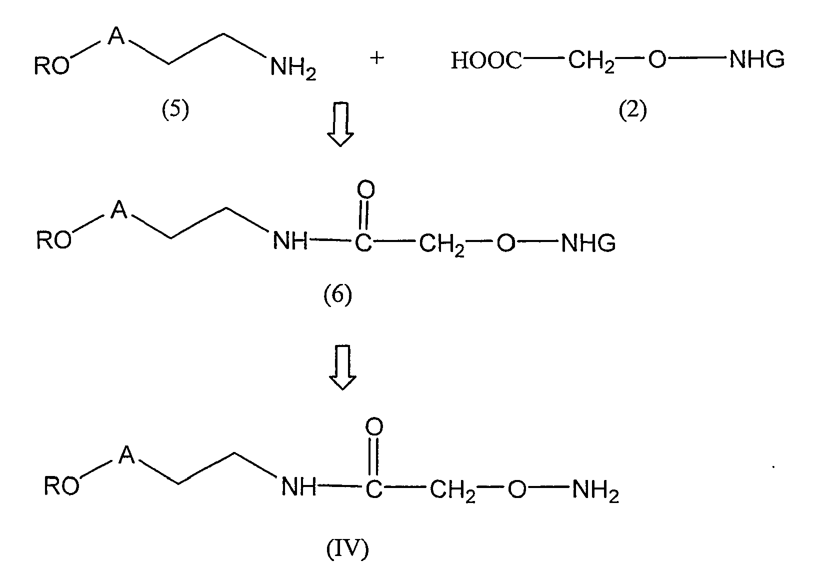

In the above reaction scheme, A and R are the same as defined above.
Specifically, a polyether resin shown by the formula (5) that includes an aminomethyl group (-CH₂NH₂) at its molecular end is reacted with an N-substituted aminooxyacetic acid shown by the formula (2): GNHOCH₂COOH (wherein G represents a protecting group for the amino group) in the presence of a dehydration-condensation agent to obtain a polyether resin shown by the formula (6). The protecting group G for the amino group is then eliminated (i.e., the amino group is deprotected) to obtain the target polyether resin shown by the formula (IV).

The above reactions may be carried out in the same manner as the reactions for obtaining the polyether resin (4) from the polyether resin (1).

After completion of the reaction, the product is subjected to a post-treatment normally used in organic chemistry, and is optionally isolated by purification to obtain the target polyether resin.

Many of the polymers (i.e., starting material) shown by the formula (1) are known substances, and may be produced by a known method. A commercially available product may be directly used as the starting material.

For example, the polyether resin shown by the formula (i) may be produced as follows (see JP-T-2007-501296, for example).

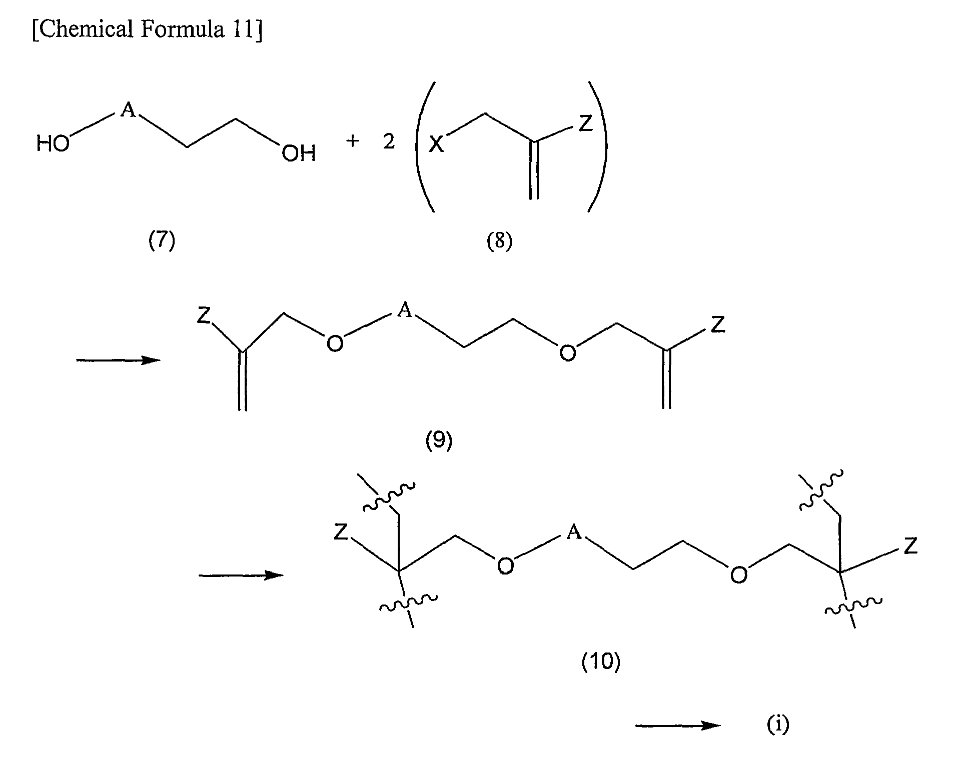

In the above reaction scheme, A is the same as defined above, X represents a halogen atom, and Z represents an aminomethyl group (CH₂NH₂) or a group from which an aminomethyl group can be derived.

Specifically, a glycol compound shown by the formula (7) is reacted with a vinyl compound shown by the formula (8) to obtain a compound shown by the formula (9). The compound shown by the formula (9) is crosslinked to obtain a compound shown by the formula (10). The group shown by Z (i.e., a group from which an aminomethyl group can be derived) of the compound shown by the formula (10) is converted into an aminomethyl group to obtain the compound shown by the formula (i). When the group shown by Z in the formula (10) is an aminomethyl group, the compound shown by the formula (10) is the compound shown by the formula (i). The details are described below.

The glycol compound shown by the formula (7) is reacted with the vinyl compound shown by the formula (8) to obtain the compound shown by the formula (9).

The glycol compound shown by the formula (7) may be reacted with the vinyl compound shown by the formula (8) in an appropriate solvent in the presence of a base.
The vinyl compound shown by the formula (8) is normally used in an amount of 2 to 5 mol based on 1 mol of the glycol compound shown by the formula (7).

Examples of the base include inorganic bases such as sodium hydroxide and sodium carbonate; and organic bases such as triethylamine and pyridine. The base is normally used in an amount of 2 to 5 mol based on 1 mol of the glycol compound shown by the formula (7).

The solvent is not particularly limited insofar as the solvent is inert to the reaction. Examples of the solvent include ether solvents such as tetrahydrofuran and 1,2-dimethoxyethane; amide solvents such as N,N-dimethylformamide, N,N-dimethylacetamide, and N-methylpyrrolidone; sulfur-containing solvents such as dimethyl sulfoxide; and the like. The reaction may be carried out in a two-phase solvent of an organic solvent and water (e.g., a mixed solvent of methylene chloride and water). In this case, it is preferable to carry out the reaction in the presence of a phase transfer catalyst such as tetrabutylammonium bromide.

The reaction smoothly proceeds at 0 to 100°C.
The reaction time is several minutes to several tens of hours.
After completion of the reaction, the product is subjected to a post-treatment normally used in organic chemistry, and is optionally purified to obtain the target compound shown by the formula (9).

The compound shown by the formula (9) is then crosslinked to obtain the compound shown by the formula (10).
The compound shown by the formula (9) may be crosslinked by heating the compound shown by formula (9) to a given temperature in the presence of a radical initiator (e.g., benzoyl peroxide (BPO) or azobisisobutyronitrile (AIBN)) for example.

The crosslinking reaction may be carried out in an appropriate solvent. The solvent is not particularly limited insofar as the solvent is inert to the reaction. Examples of the solvent include aromatic hydrocarbon solvents such as benzene, toluene, and xylene; alicyclic hydrocarbon solvents such as cyclopentane and cyclohexane; alcohol solvents such as cyclopentanol and cyclohexanol; and a mixed solvent consisting of two or more of these solvents.

The crosslinking reaction smoothly proceeds at 50 to 150°C. The reaction time is normally several minutes to several tens of hours.
After completion of the reaction, the product is subjected to a post-treatment normally used in organic chemistry, and is optionally purified to obtain the target compound shown by the formula (10).

The group shown by Z (i.e., a group from which an aminomethyl group can be derived) of the compound shown by the formula (10) is then converted into an aminomethyl group to obtain the compound shown by the formula (i).

Examples of the group shown by Z (i.e., a group from which an aminomethyl group can be derived) include an amide group (CONH₂), a cyano group (CN), a nitromethyl group (CH₂NO₂), and the like. An aminomethyl group can be derived from these groups by a known reduction reaction.

The method of producing the crosslinked polyether resin shown by the formula (i) has been described above. The crosslinked polyether resin shown by the formula (ii) may be produced in the same manner as the crosslinked polyether resin shown by the formula (i).

Many of the polyether resins shown by the formulas (iii) and (5) are known substances, and may be produced by a known method (see JP-A-7-196925, for example). A commercially available product may be directly used.

The carbonyl compound remover according to the present invention includes at least one polyether resin that includes a unit shown by any of the formulas (I) to (IV) as an active ingredient.

Since the carbonyl compound remover according to the present invention includes the polyether resin that includes an aminooxy group (ONH₂) at the end of the polymer main chain having a polyether structure as an active ingredient, the carbonyl compound remover exhibits an excellent carbonyl compound removing capability. Since the aminooxy group is bonded to the polymer main chain via an amide bond, the carbonyl compound remover is rarely hydrolyzed, and has low toxicity (i.e., it is safe).

The form of the carbonyl compound remover is not particularly limited. For example, the carbonyl compound remover may be produced by forming one or more polyether resins that include a unit shown by any of the formulas (I) to (IV) in the form of particles, a film, a sheet, or the like.

The carbonyl compound remover according to the present invention is useful for removing a carbonyl compound contained in an infusion that contains a sugar and an amino acid, a sugar infusion, a peritoneal dialysate, a liquid food, a liquor, and the like; purifying an organic chemical that contains a carbonyl compound; purifying industrial water and industrial liquid waste; and the like.

2) The method of preventing coloration of an infusion according to the second aspect of the present invention includes causing the above carbonyl compound remover to come in contact with an infusion that may produce and accumulate a carbonyl compound during heat sterilization or storage, or an infusion that contains a carbonyl compound.

The infusion as an object in the method of the present invention is not particularly limited insofar as the infusion may produce and accumulate a carbonyl compound during heat sterilization or storage, or contains a carbonyl compound. The infusion is preferably a mixture of an amino acid infusion and a sugar infusion that is easily colored due to a Maillard reaction.

Examples of the amino acid infusion include an aqueous solution that includes an electrolyte and at least one amino acid selected from the group consisting of L-isoleucine, L-leucine, L-lysine, L-methionine, L-phenylalanine, L-threonine, L-tryptophan, L-valine, L-alanine, L-arginine, L-aspartic acid, L-glutamic acid, L-histidine, L-proline, L-serine, L-tyrosine, glycine, and L-cysteine (see JP-A-2001-79064 and JP-A-2007-56013, for example).

The sugar infusion may include a reducing sugar (e.g., glucose, fructose, or maltose) or a nonreducing sugar (e.g., trehalose, xylytol, sorbitol, or glycerol) (see JP-A-2001-79064, for example).

The infusion may also include vitamins such as vitamin B_{1,} vitamin B₂, vitamin B₆, vitamin B₁₂, vitamin C, vitamin A, vitamin D, vitamin E, vitamin K, vitamin H, folic acid, pantothenic acid, and nicotinic acid; trace metals such as inorganic salts and organic salts of zinc, copper, and selenium that become insufficient in chronic renal failure dialysis patients; a pH adjusting agent such as an inorganic acid (e.g., hydrochloric acid), an organic acid (e.g., acetic acid or citric acid), or a gas (e.g., carbon dioxide); and the like.

The carbonyl compound remover according to the present invention (hereinafter may be referred to as "remover") may be caused to come in contact with the infusion by an arbitrary method insofar as the remover is caused to come in contact with an infusion that contains a carbonyl compound (e.g., a medical sugar infusion that has been sterilized using high-pressure steam) to remove the carbonyl compound from the infusion. The expression "contact" here means that the remover is caused to come into direct contact with an infusion that contains a carbonyl compound.

The remover may be caused to come in contact with an infusion that contains a carbonyl compound by (1) adding an infusion that contains a carbonyl compound (e.g., a medical sugar infusion that has been sterilized using high-pressure steam) to a container (e.g., infusion bag) that contains the remover, and trapping the carbonyl compound, (2) charging a column with the remover in the form of particles, a film, fibers, or the like, and passing or circulating an infusion that contains a carbonyl compound through the column, (3) molding the remover in the shape of a film or a sheet, and filling a container formed of the molded product with an infusion that contains a carbonyl compound, or (4) forming a layer of the remover on the surface of a film or a sheet formed of a polymer (e.g., polyolefin such as polyethylene or polypropylene) (i.e., infusion container material), producing an infusion container so that the layer of the remover is positioned on the inner side, and filling the container with an infusion that contains a carbonyl compound, for example.

The infusion that has been treated with the remover may be stored in a separate container or the like, if necessary. In this case, a carbonyl compound that is produced and accumulated during storage may be trapped by placing the remover in the storage container.

The remover may be used in an appropriate amount depending on the type of infusion, the amount of infusion, the carbonyl compound content in the infusion, the removal rate and the removal speed achieved by the remover, and the temperature during treatment. For example, when producing a carbonyl compound removing apparatus by filling a column with the remover, and circulating an infusion through the carbonyl compound removing apparatus immediately before introducing the infusion into a human body, it is preferable to achieve a sufficient carbonyl compound removing capability from the viewpoint of reducing the size of the removing apparatus.

Since the remover has a high capability of removing a carbonyl compound contained in a sugar solution (e.g., peritoneal dialysate or infusion), a compound contained in a sugar solution may be removed by causing the remover to come in contact with the sugar solution to purify the sugar solution.

The remover is preferably used in an amount (weight basis) of 1/1000 to 1, and more preferably 1/100 to 1/10, relative to the amount of infusion.

### EXAMPLES

The present invention is further described below by way of examples. Note that the present invention is not limited to the following examples.

### (Example 1) Production of hydroxyamine-containing resin

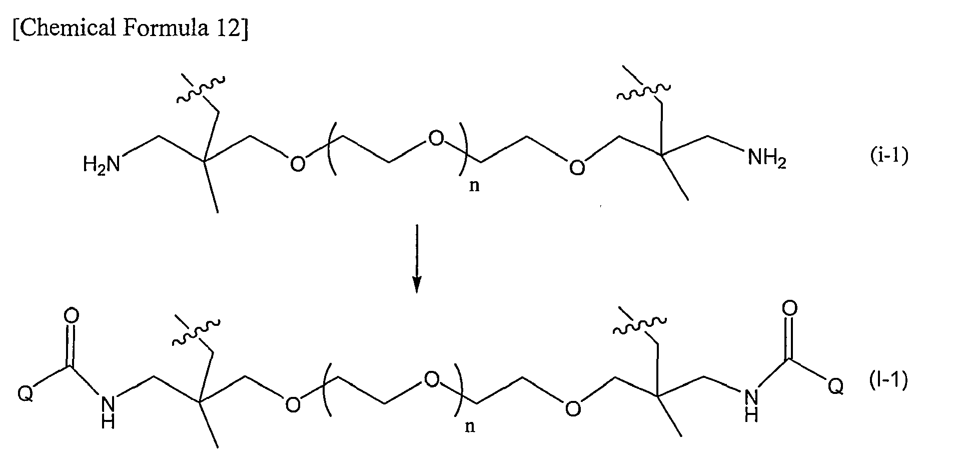

In the above reaction scheme, n is an integer from 1 to 100.
A syringe (50 ml) with a frit was charged with 0.97 g of a resin having a structure shown by the formula (i-1) and including an aminomethyl group at its molecular end ("Aminomethyl-ChemMatrix Resin", 35-100 mesh, 0.62 mmol/g, manufactured by Matrix Innovation). The resin was washed three times with 20 ml of N,N-dimethylformamide (DMF), and swollen with 30 ml of DMF over one hour. DMF was then removed.

344 mg (1.8 mmol) of N-Boc-aminooxyacetic acid, 745 mg (1.8 mmol) of O-(6-chlorobenzotriazol-1-yl), 305 mg (1.8 mmol) of 6-chloro-1-hydroxybenzotriazole, and 450 mg (3.6 mmol) of diisopropylethylamine were dissolved in 30 ml of DMF. The solution was added to the syringe. After shaking the syringe for two hours, the mixture was washed succesively with 20 ml of DMF for one minute (three times), 20 ml of dichloromethane for one minute (three times), and 20 ml of DMF for one minute (three times).

A solution prepared by dissolving 0.5 ml of acetic anhydride and 0.5 ml of pyridine in 30 ml of DMF was added to the syringe. After shaking the syringe for 30 minutes, the mixture was washed succesively with 20 ml of DMF for one minute (three times), 20 ml of dichloromethane for one minute (three times), 20 ml of DMF for one minute (three times), and 20 ml of dichloromethane for one minute (three times), and dried under reduced pressure.

After the addition of a mixture of 14.25 ml of trifluoroacetic acid and 0.75 ml of triisopropylsilane, the syringe was shaken for one and a half hours. The mixture was then washed succesively with 20 ml of dichloromethane for one minute (three times), 20 ml of DMF for one minute (three times), 20 ml of dichloromethane for one minute (three times), 20 ml of DMF for one minute (three times), 20 ml of dichloromethane for one minute (three times), 20 ml of DMF for one minute (three times), and 20 ml of dichloromethane for one minute (three times), and dried under reduced pressure to obtain a crosslinked polyether resin having a structure shown by the formula (I-1).

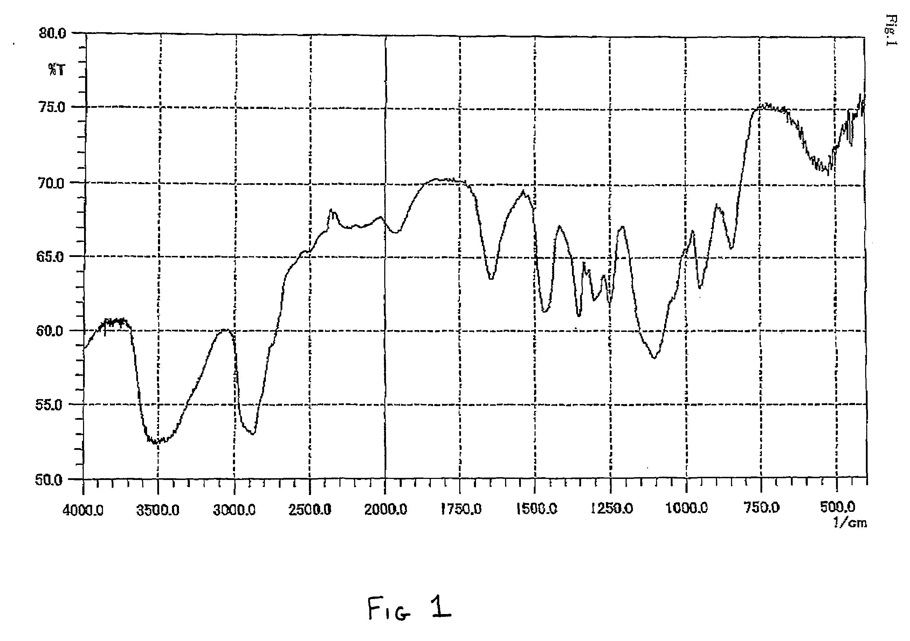

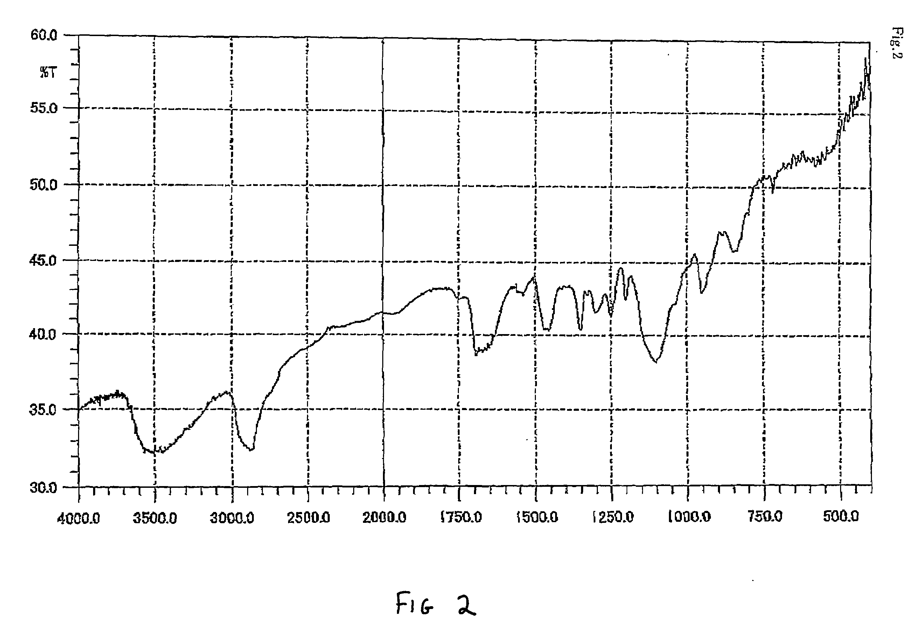

The IR spectra of the resin (starting material) having a structure shown by the formula (i-1) and including an aminomethyl group at its molecular end, and the crosslinked polyether resin having a structure shown by the formula (I-1) were measured. FIGS. 1 and 2 show the IR spectra. In FIGS. 1 and 2, the horizontal axis indicates wave number (cm⁻¹), and the vertical axis indicates absorbance.
FIG. 1 shows the IR spectrum of the resin (starting material) having a structure shown by the formula (i-1) and including an aminomethyl group at its molecular end. FIG. 2 shows the IR spectrum of the crosslinked polyether resin having a structure shown by the formula (I-1).

In FIG. 1 (i.e., the IR spectrum of the starting material), a broad peak is observed around 1650 to 1700 cm⁻¹ (absorption maximum). The shape of the peak shown in FIG. 2 (i.e., the IR spectrum of the reaction product) differs from that of the peak shown in FIG. 1. This is considered to be because the amino group (NH₂ group) of the starting material changed into NHC(=O)CH₂-O-NH₂.

### Evaluation of coloration prevention achieved by hydroxyamine-containing resin

2.1 ml of a first layer solution (glucose: 37.499 g, sodium chloride: 0.399g, sodium lactate: 1.145 g, calcium gluconate: 0.560 g, magnesium sulfate: 0.312 g, and zinc sulfate: 0.700 mg were contained in 350 ml of an aqueous solution) was mixed with 0.9 ml of a second layer solution (L-leucine: 2.100 g, L-isoleucine: 1.200 g, L-valine: 1.200 g, lysine hydrochloride: 1.965 g (L-lysine: 1.573 g), L-threonine: 0.855 g, L-tryptophan: 0.300g, L-methionine: 0.855 g, L-phenylalanine: 1.050 g, L-cysteine: 0.150 g, L-tyrosine: 0.075 g, L-arginine: 1.575 g, L-histidine: 0.750 g, L-alanine: 1.200 g, L-purorinn: 0.750 g, L-serine: 0.450 g, glycine: 0.885 g, L-aspartic acid: 0.150 g, L-glutamic acid: 0.150 g, and dipotassium phosphate: 0.870 g were contained in 50 ml of an aqueous solution). The pH of the mixture was adjusted to 5.5 using concentrated hydrochloric acid.

After the addition of 50 mg of the hydroxyamine-containing resin to the mixture, the container was sealed. The mixture was heated at 105°C for one and a half hour with stirring. The resulting solution was filtered through a filter ("Chromatodisc 25A" manufactured by GL Sciences Inc., pore size: 0.455 µm). The transmittance (420 nm) of 100 microliters of the filtrate was measured using a 96-well plate.
In Comparative Example 1, an operation was performed in the same manner as described above, except that the hydroxyamine-containing resin was not added.
The results are shown in Table 1. In Table 1, Resin 1 is the hydroxyamine-containing resin, and Resin 2 is the resin (starting material) having a structure shown by the formula (i-1) and including an aminomethyl group at its molecular end.

**TABLE 1**

| Example 1 | Comparative Example 1 | Transmittance (420 nm) (%) |
|---|---|---|
| Amount (mg) of Resin 1 | Amount (mg) of Resin 2 | |
| 100 | - | 80.5 |
| 50 | - | 83.6 |
| - | 100 | 50.1 |
| - | 50 | 49.8 |
| - | - | 70.0 |

As shown in Table 1, coloration was suppressed by adding Resin 1. On the other hand, coloration was promoted by adding Resin 2.
Not only the solution but also the resin turned brown when the Resin 2 was added and the solution was heated with stirring. On the other hand, in the case of the Resin 1, coloration of the resin was not observed

## Claims

1. A carbonyl compound remover comprising at least one polyether resin that includes a unit shown by any of the formulas (I) to (IV) as an active ingredient, 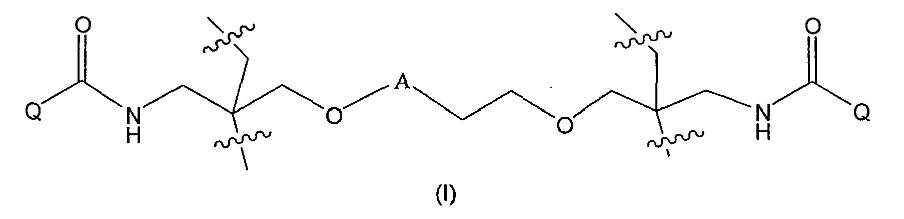 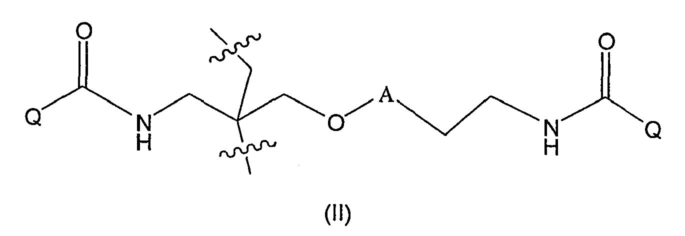 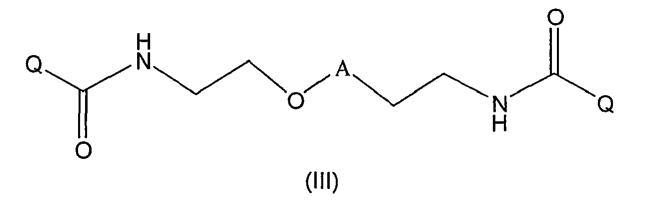 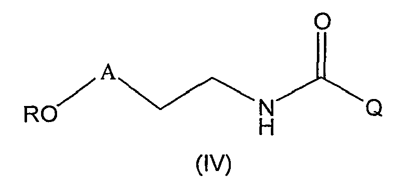 wherein A represents a unit shown by the following formula (A1) or (A2), or a combination of the units shown by the formulas (A1) and (A2), 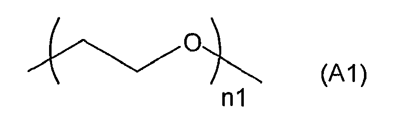 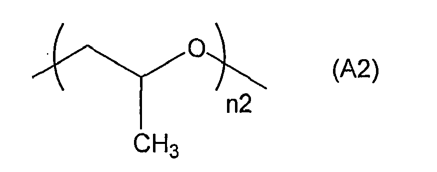 wherein n1 and n2 are individually integers from 1 to 100, R represents a hydrogen atom or an alkyl group having 1 to 6 carbon atoms, and Q represents a group shown by CH₂ONH₂.

2. A method of preventing coloration of an infusion comprising causing the carbonyl compound remover according to claim 1 to come in contact with an infusion that may produce and accumulate a carbonyl compound during heat sterilization or storage, or an infusion that contains a carbonyl compound.

3. A crosslinked polyether resin comprising a unit shown by the following formula(I-1) or (II-1), 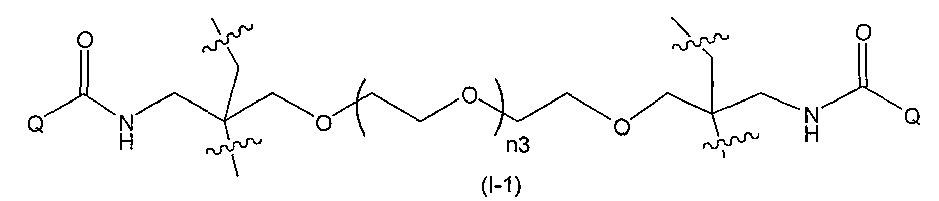 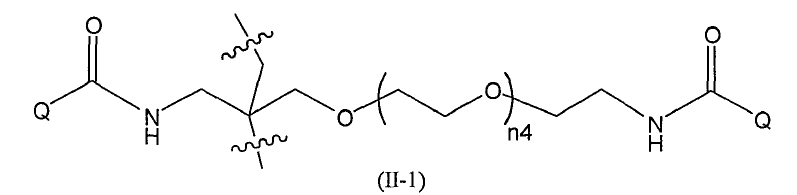 wherein n3 and n4 are individually integers from 1 to 100, and Q represents a group shown by CH₂ONH₂.
